# FASCICULE DE BREVET EUROPEEN

(11) **EP 2 091 790 B1**
(45) Date de publication et mention de la délivrance du brevet: **07.05.2014**
(21) Numéro de dépôt: 07866540.3
(22) Date de dépôt: 23.11.2007
(51) Int. Cl.: B60R 21/34

(54) **DOUBLURE DE CAPOT D'UN VEHICULE AUTOMOBILE ET SES COMBINAISONS AVEC CERTAINES PARTIES DU VEHICULE**
AUSKLEIDUNG FÜR DIE MOTORHAUBE EINES FAHRZEUGES UND KOMBINATIONEN DARAUS MIT BESTIMMTEN FAHRZEUGTEILEN
LINING FOR THE HOOD OF AN AUTOMOTIVE VEHICLE AND COMBINATIONS THEREOF WITH CERTAIN PARTS OF THE VEHICLE

(30) Priorité: 23.11.2006 FR 0655086
(43) Date de publication de la demande: 26.08.2009
(73) Titulaire: Compagnie Plastic Omnium, 69007 Lyon (FR)
(72) Inventeur: ROCHEBLAVE, Laurent, 69100 Villeurbanne (FR); CANDEAU, Axel, 64000 Pau (FR); MARTIN, Laurent, 07340 Peaugres (FR)
(74) Mandataire: Remy, Vincent Noel Paul
(86) Numéro de dépôt international: PCT/FR2007/052386
(87) Numéro de publication internationale: WO 2008/062143

(56) Documents cités:
- EP-A- 1 642 786
- EP-A- 1 707 452
- WO-A-03/011658
- WO-A-2005/120908
- DE-A1- 10 109 663
- DE-A1- 10 354 371
- DE-A1-102004 041 269

## Description

La présente invention concerne une doublure de capot d'un véhicule automobile et ses combinaisons avec différents points durs du compartiment moteur.

On sait qu'un capot de véhicule automobile est constitué par une peau extérieure en tôle métallique ou en matière plastique, doublée par une doublure intérieure qui a, entre autres, pour rôle d'augmenter la rigidité du capot, notamment au voisinage de sa périphérie.

A cet effet, la doublure est généralement conformée de manière à définir avec le capot un corps creux qui suit globalement les contours du capot.

Ainsi rigidifié, le capot peut être manoeuvré sans trop se voiler.

Lorsque le capot est fermé, on remarque que le corps creux se retrouve souvent au-dessus d'organes rigides haut placés dans le compartiment moteur, comme par exemple une batterie, le rebord d'une boîte à eau formée par une cloison d'auvent, un boîtier électronique, une pompe, une gaine rigide pour faisceau électrique, des charnières, une gâche, etc.

On appelle compartiment moteur le volume se trouvant sous le capot et sa doublure, depuis l'avant du véhicule jusqu'au tablier, dans le cas classique des véhicules ayant le moteur à l'avant. Toutes les pièces se trouvant dans ce volume sont donc considérées comme appartenant au compartiment moteur au sens de l'invention.

On sait par ailleurs que les capots sont conçus de manière à endommager le moins possible la tête d'un piéton qui viendrait l'impacter lors d'un accident de la circulation. Les capots présentent à cet effet des caractéristiques d'amortissement des chocs dans des zones prédéfinies.

Cependant, en raison de la présence du corps creux précité, la zone sensiblement périphérique du capot présente de mauvaises caractéristiques eu égard aux chocs piétons car le capot, fortement rigidifié dans sa périphérie, n'est pas en mesure d'absorber l'énergie d'un choc avec la tête d'un piéton. Au contraire, si le corps creux prend rapidement appui sur un point dur haut placé du compartiment moteur, la tête du piéton peut subir de graves dommages en raison de la trop forte décélération durant longtemps à laquelle elle est soumise.

On quantifie le risque de dommage pour la tête d'un piéton en calculant l'indice connu sous l'acronyme HIC (de l'anglais Head Injury Criterion) ou HPC (Head Performance Criterion), dont la valeur est bien connue de l'homme du métier, mais dont on trouvera la définition dans la Décision de la Commision 2004/90/CE du 23 décembre 2003 concernant les prescriptions techniques pour la mise en oeuvre de l'article 3 de la directive 2003/202/CE du Parlement européen et du Conseil relative à la protection des piétons et autres usages vulnérables de la route en cas de collision avec un véhicule à moteur et préalablement à celle-ci et modifiant la directive 70/156/CEE. La décélération de la tête provoquée par la rencontre d'un point dur dégrade évidemment fortement le HIC. DE 102004041269 A décrit une doublure de capot de véhicule automobile selon le préambule de la revendication 1.

La présente invention vise à proposer une solution à ce problème.

A cet effet, l'invention a pour objet un ensemble d'un capot de véhicule automobile et d'une doublure de capot de vehicule automobile selon la revendication 1.

Dans la présente description, on utilise le terme « capot » pour désigner la partie externe de l'assemblage permettant de fermer le compartiment moteur. Cette partie pourrait également être appelée « peau extérieure de capot ». On utilise le terme « doublure » pour désigner la partie constituant, avec le capot, un corps creux rigidifiant. Il est bien entendu conforme à l'invention que la doublure s'étende sous le capot en d'autres endroits que le corps creux, et notamment sous toute la surface inférieure du capot.

Le terme « corps creux » s'entend comme un élément de la doublure délimitant en combinaison avec le capot une cavité sensiblement fermée.

Ainsi, grâce à l'invention, le corps creux rigidifiant le capot ne constitue plus un obstacle à la préservation de la tête d'un piéton frappant une région périphérique du capot. Moyennant un dimensionnement approprié des zones de faiblesse, notamment des zones de moindre épaisseur, du fond du corps creux, le corps creux peut continuer à remplir son rôle de rigidification du capot, tout en permettant un traitement efficace du choc piéton.

Le dimensionnement de la zone de faiblesse conduisant à la rupture de celle-ci est particulièrement avantageux, par rapport à un dimensionnement de la zone de faiblesse qui permettrait seulement un affaissement du corps creux.

D'une part, la rupture du corps creux permet de mieux relâcher l'effort exercé par le point dur sur la tête du piéton que dans le cas d'un affaissement sans rupture et ainsi de diminuer encore la valeur du critère HIC pour le choc piéton et, par conséquent, de diminuer les risques de blessures du piéton.

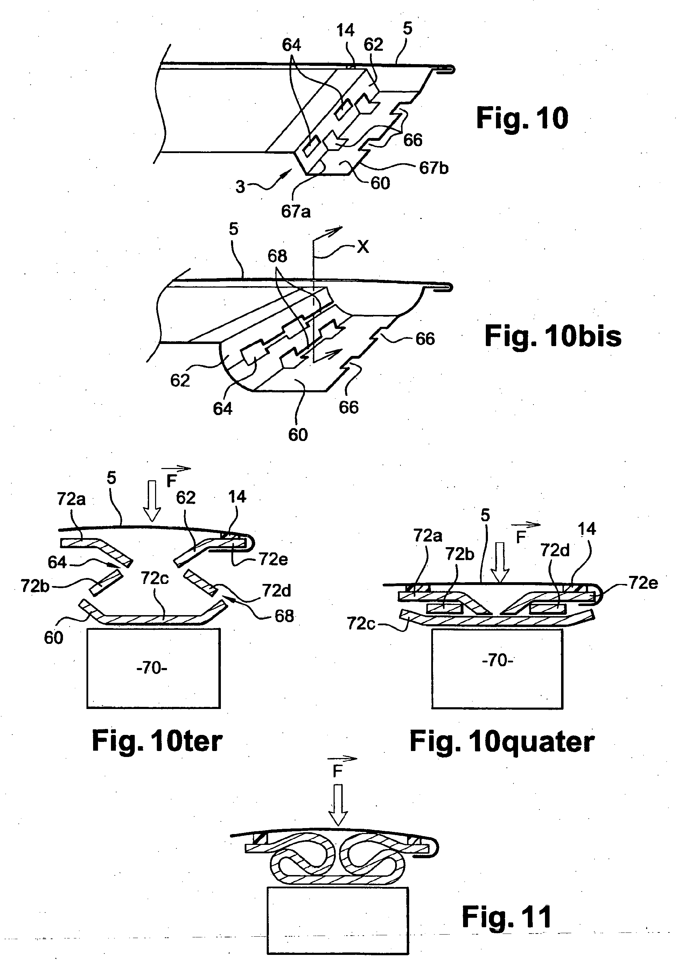

D'autre part, la rupture de la zone de faiblesse permet un enfoncement plus important du capot dans le compartiment moteur et, de ce fait, une utilisation d'un maximum de la hauteur du corps creux sous forme de course disponible pour la tête du piéton. En effet, l'enfoncement du capot dans le compartiment moteur dépend de l'écrasement du corps creux. Or, dans le cas d'un affaissement sans rupture du corps creux, la hauteur incompressible de la doublure au niveau du corps creux, du fait de la superposition sans rupture des parois de celui-ci, est plus importante que la hauteur incompressible de la doublure lorsque les parties formant le corps creux ne sont plus liées les unes aux autres, suite à une rupture du corps creux. En effet, comme on le voit sur la figure 11, suite à un affaissement sans rupture du corps creux, si la hauteur du corps creux est diminuée car les parois latérales de celui-ci se plient, le rayon de courbure de la paroi latérale au niveau de la pliure n'est pas nul, contrairement au cas où une rupture de la paroi s'est produite (cas représenté à la figure 10quater), et ce rayon de courbure augmente la hauteur incompressible du corps creux.

Il est clair que, selon l'invention, le dimensionnement de la zone de faiblesse, notamment la zone de faible épaisseur, dépend notamment de son emplacement sur le capot, du capot lui-même, des matériaux utilisés pour réaliser doublure et capot, ainsi que de la forme et de l'emplacement des points durs. L'homme du métier saura trouver les dimensions permettant d'atteindre l'objectif défini ci-dessus.

Dans un mode de réalisation particulier, la zone de faiblesse est une zone de moindre épaisseur.
Par « zone de moindre épaisseur », on entend une zone d'épaisseur inférieure à l'épaisseur du reste du corps creux. La zone de moindre épaisseur peut être ménagée dans le fond de la doublure, autrement dit « fond du corps creux », et peut comprendre, plus particulièrement consister en, une rainure longitudinale située sensiblement au milieu dudit fond, sur une largeur suffisamment grande pour couvrir les points durs présents sous la doublure dans le compartiment moteur.

Dans ce mode de réalisation, en cas de choc piéton, la rainure se fait découper dans sa longueur par le ou les point(s) dur(s) et le corps creux se sépare en deux parties qui laissent entre elles l'espace nécessaire au passage d'au moins une partie du point dur lorsque le corps creux s'enfonce dans le compartiment moteur.

Alternativement, deux zones de moindre épaisseur peuvent se situer aux pieds de parois latérales bordant le fond de la doublure sans couvrir les zones d'appui des points durs du compartiment moteur. Dans ce cas, le fond du corps creux se désolidarise du reste du corps creux de la doublure, notamment des parois latérales du corps creux par cisaillement des zones de moindre épaisseur.

Dans un autre mode de réalisation, la zone de faiblesse comprend un orifice traversant ménagé dans le fond et/ou au moins une des parois latérales du corps creux.

De façon avantageuse, la zone de faiblesse est dimensionnée pour se rompre en permettant à au moins une partie formant le corps creux, notamment au moins une partie d'une paroi formant paroi latérale du corps creux, de s'enfoncer dans le compartiment moteur plus bas que le point dur.

Par « partie formant le corps creux » ou « paroi formant le corps creux », on entend une partie ou paroi appartenant au corps creux avant sa rupture. La rupture du corps creux permet alors de ménager un passage pour le point dur entre les parois formant parois latérales du corps creux, ce qui permet de s'affranchir de l'écrasement du corps creux, auquel cas la hauteur incompressible du corps creux n'est plus un facteur limitant la course de la tête du piéton. On peut donc encore augmenter la course disponible pour la tête du piéton.

Avantageusement, la doublure est réalisée au moins partiellement en une matière plastique, notamment en un matériau composite, ce qui permet de faciliter la fabrication de la zone de faiblesse, notamment lorsque celle-ci est fabriquée sous forme de zone de moindre épaisseur.

La présente invention a aussi pour objet une doublure de capot de véhicule automobile destinée à rigidifier ce capot au voisinage de sa périphérie en formant avec lui un corps creux au moins sur une partie de sa périphérie, cette doublure présentant une section transversale sensiblement en U ayant un fond et des parois latérales, caractérisé en ce que ledit fond ou lesdites parois latérales présentent, au moins localement, une zone de faible épaisseur, dimensionnée de manière à ce que, en cas de choc du capot avec la tête d'un piéton, le fond du corps creux prenne appui sur un point dur haut placé du compartiment moteur et cède, dans sa partie de moindre épaisseur, en permettant au corps creux de s'enfoncer dans le compartiment moteur plus bas que ledit point dur.

L'invention a également pour objet la combinaison d'une doublure selon l'invention et d'un point dur haut placé dans le compartiment moteur du véhicule automobile.

La doublure de l'invention se combine de manière particulièrement avantageuse avec le rebord intérieur en tôle d'une boîte à eau formée par une cloison d'auvent solidaire de la caisse du véhicule et s'étendant en arrière du compartiment moteur, au pied du pare-brise.

En effet, le rebord en tôle de la boîte à eau formée par la cloison d'auvent constitue un point dur haut placé du compartiment moteur, qui est particulièrement dangereux pour la tête d'un piéton heurtant le capot au pied du pare-brise. Un tel point dur, par sa forme de lame, est à même de détruire le fond du corps creux pour procurer la course d'enfoncement du capot nécessaire à la protection de la tête du piéton.

L'invention a donc également pour objet la combinaison d'une doublure telle que décrite ci-dessus et d'une boîte à eau formée par une cloison d'auvent ayant un rebord sensiblement vertical, au voisinage duquel se trouve le fond du corps creux lorsque le capot est en position fermée.

Dans un mode de réalisation particulier de cette invention, le rebord de la boîte à eau formée par la cloison d'auvent porte un joint d'étanchéité qui est destiné à venir s'appuyer contre le fond du corps creux en position fermée du capot.

Dans beaucoup de véhicules, la boîte à eau formée par la cloison d'auvent se prolonge au-delà du pied du pare-brise, par des zones de goulotte, où la structure du véhicule forme des gaines rigides, s'étendant depuis les montants latéraux du pare-brise en direction de l'avant du véhicule et accueillant des faisceaux électriques, une batterie et des blocs calculateurs, eux-mêmes rigides vis-à-vis de la tête des piétons.

L'invention a donc également pour objet la combinaison d'une doublure telle que décrite ci-dessus et d'une goulotte, ou gaine rigide, s'étendant depuis les montants latéraux du pare-brise en direction de l'avant du véhicule, ayant un rebord sensiblement vertical, au voisinage duquel se trouve le fond de la doublure lorsque le capot est en position fermée.

Le corps creux constitué par la doublure avec le capot peut posséder, d'une part, une partie centrale correspondant à la zone auvent située au pied du pare-brise et d'autre part, deux retours latéraux correspondant aux zones de goulottes ou gaines rigides, longeant sensiblement les deux coins arrière du capot.

Un autre point dur possible est une butée capot, se trouvant près d'un bord du capot opposé à ses charnières. Une telle butée capot est montée fixe dans le compartiment moteur. Elle peut par exemple être portée par une face avant technique ou une traverse porte-serrure.

L'invention a donc également pour objet la combinaison d'une doublure telle que décrite ci-dessus et d'une butée capot montée fixe dans le compartiment moteur.

Le corps creux selon l'invention se combine également de manière particulièrement avantageuse avec une charnière du capot solidaire du fond de la doublure. Dans ce cas, le fond du corps creux comporte une partie en porte-à-faux par rapport à la charnière et dans laquelle est ménagée la zone de faiblesse, notamment la portion de faible épaisseur susceptible de se détruire par cisaillement en cas d'effort vertical subi par le capot.

Ainsi, l'invention permet également de résoudre le problème du traitement du choc piéton au voisinage des charnières, lesquelles constituent aussi des points durs situés en hauteur dans le compartiment moteur. A cet effet, l'invention a pour objet une combinaison d'une doublure telle que décrite ci-dessus et de l'élément supérieur mobile, appelé charnon mobile, d'une charnière de capot solidaire du fond de la doublure, dans laquelle le fond de la doublure comporte une partie en porte-à-faux par rapport au charnon mobile et dans laquelle est ménagée la zone de faiblesse, notamment la portion de faible épaisseur susceptible de se détruire par cisaillement en cas d'effort vertical subi par le capot.

Enfin, un autre point dur possible est un penne de serrure monté fixe dans le compartiment moteur et l'invention a aussi pour objet une combinaison d'une doublure telle que décrite ci-dessus et d'une gâche de serrure solidaire du fond de la doublure, le fond de la doublure comportant une partie en porte-à-faux par rapport à la gâche et dans laquelle est ménagée la zone de faiblesse, notamment la portion de faible épaisseur susceptible de se détruire par cisaillement en cas d'effort vertical subi par le capot.

Afin de mieux faire comprendre l'invention, on va en décrire maintenant des modes de réalisation donnés à titre d'exemples non limitatifs en référence aux dessins annexés, dans lesquels :
- la figure 1 est une vue de dessus d'un capot de véhicule automobile muni d'une doublure selon un mode de réalisation de l'invention,
- la figure 2 est une section selon II-II de la figure 1,
- la figure 3 est une vue rapprochée du détail III de la figure 2, montrant un corps creux périphérique de la doublure,

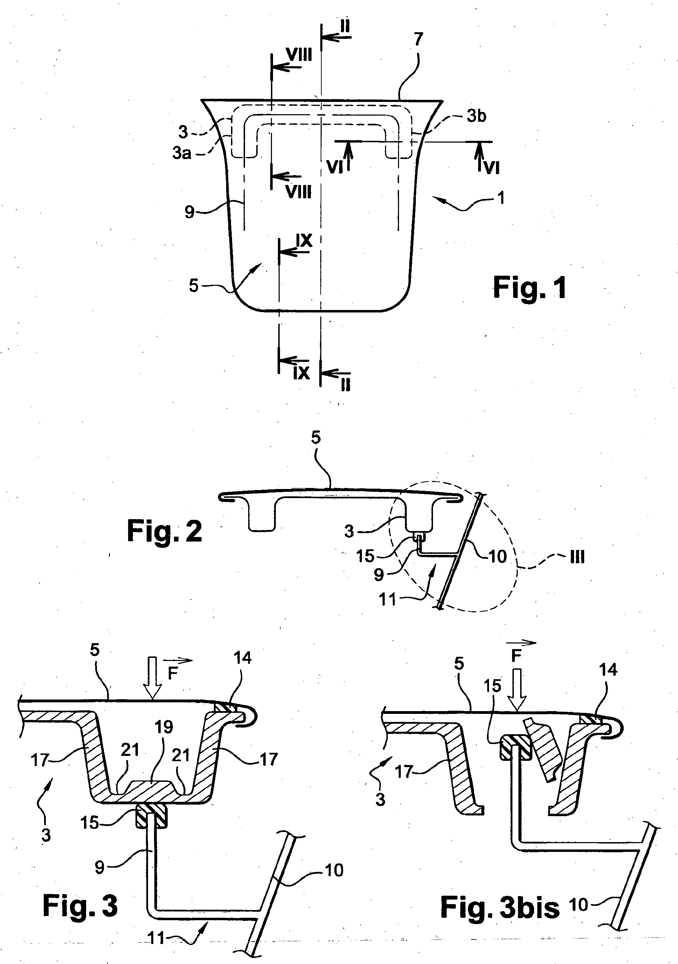

- la figure 3bis représente la configuration de la doublure de la figure 3, une fois que celle-ci a été soumise à un choc piéton,

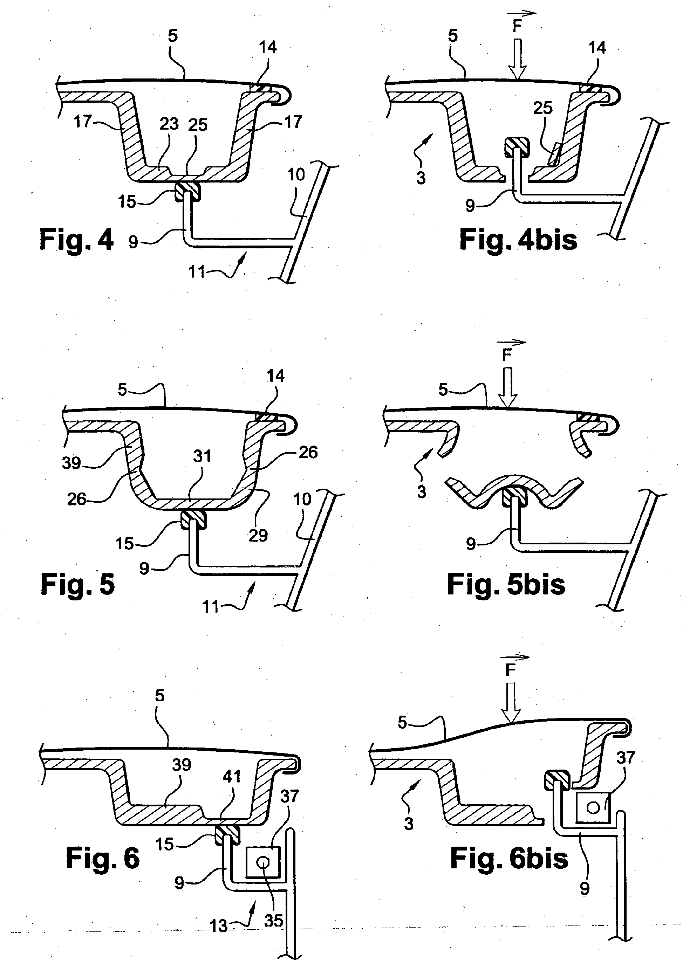

- la figure 4 est une vue analogue à la figure 3 montrant une section d'une doublure selon un autre mode de réalisation,
- la figure 4bis représente la configuration de la doublure de la figure 4, une fois que celle-ci a été soumise à un choc piéton,
- la figure 5 est une vue analogue à la figure 4 montrant une section d'une doublure selon un autre mode de réalisation,
- la figure 5bis représente la configuration de la doublure de la figure 5, une fois que celle-ci a été soumise à un choc piéton,
- la figure 6 est une section selon VI-VI du capot de la figure 1, montrant un détail de la doublure,
- la figure 6bis représente la configuration de la doublure de la figure 6, une fois que celle-ci a été soumise à un choc piéton,

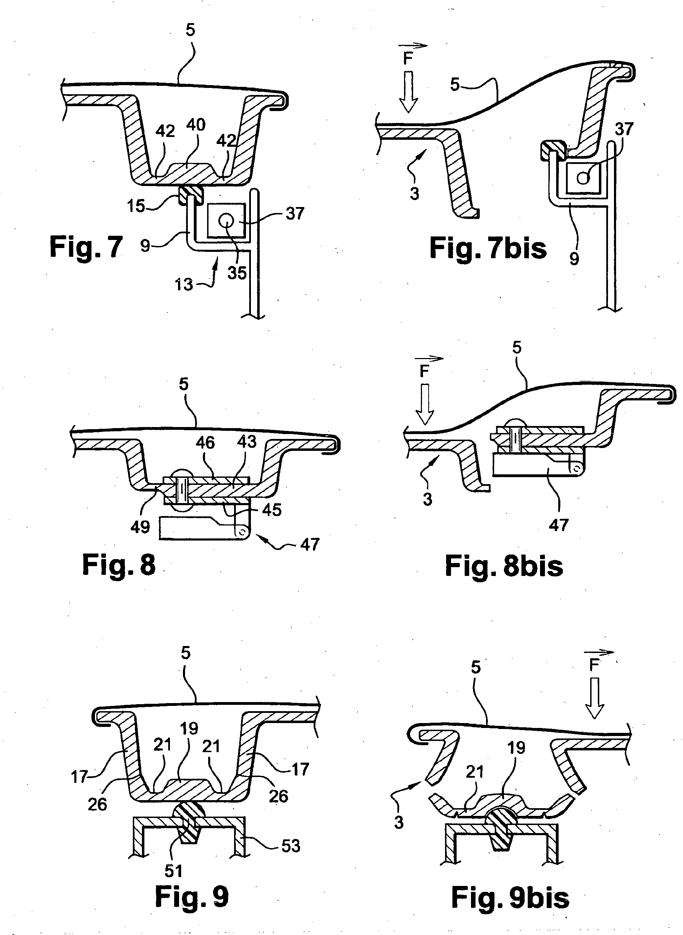

- la figure 7 est une vue analogue à la figure 6 correspondant à un autre mode de réalisation,
- la figure 7bis représente la configuration de la doublure de la figure 7, une fois que celle-ci a été soumise à un choc piéton,
- la figure 8 est une section selon VIII-VIII du capot de la figure 1, montrant un autre détail de la doublure,
- la figure 8bis représente la configuration de la doublure de la figure 8, une fois que celle-ci a été soumise à un choc piéton,
- la figure 9 est une section selon IX-IX du capot de la figure 1, montrant un autre détail de la doublure,
- la figure 9bis représente la configuration de la doublure de la figure 9, une fois que celle-ci a été soumise à un choc piéton,
- la figure 10 est une vue en perspective et de dessous d'une doublure de capot de véhicule automobile selon un autre mode de réalisation de l'invention,
- la figure 10bis est une vue analogue à celle de la figure 10, représentant la configuration de la doublure de la figure 10, au cours d'un choc piéton
- la figure 10ter est une vue en section de la doublure de la figure 10bis, selon la coupe X-X,
- la figure 10quater est une vue analogue à celle de la figure 10ter, représentant la configuration de la doublure de la figure 10, une fois que celle-ci a été soumise à un choc piéton,
- la figure 11 est une vue en section d'une doublure montrant la configuration d'une doublure cédant sans rompre, une fois qu'elle a été soumise à un choc piéton.

On a représenté, sur la figure 1, un capot 1 de véhicule automobile vu de dessus, l'avant du capot se trouvant en bas de la figure tandis que l'arrière du capot se trouve en haut.

En trait interrompu, on a dessiné les contours d'un corps creux formé par une doublure 3 en dessous d'une zone périphérique 5 (seule pièce visible) du capot 1. La doublure est réalisée au moins partiellement en une matière plastique, notamment en un matériau composite, tel que le SMC (acronyme anglais pour Sheet Molding Compound) ou l'AMC (Advanced Mold Compound).

Ce corps creux s'étend sensiblement le long du bord arrière 7 du capot et comporte deux retours latéraux 3a et 3b. II suit la forme d'un rebord en tôle 9, représenté en trait mixte, appartenant à la caisse du véhicule. A l'arrière du capot, le rebord en tôle 9 appartient à une boîte à eau formée par une cloison d'auvent 11 portée par un tablier 10 séparant le compartiment moteur et l'habitacle, comme on le voit sur la figure 2, tandis que le long des bords latéraux du capot, c'est-à-dire au droit des retours 3a et 3b du corps creux, le rebord en tôle appartient à une goulotte ou gaine rigide 13, comme on le voit sur la figure 6.

Tant sur la goulotte ou gaine rigide 13 que sur la boîte à eau formée par la cloison d'auvent 11, le rebord en tôle 9 est coiffé d'un joint d'étanchéité 15 contre lequel vient s'appliquer la doublure 3, au niveau du fond du corps creux, lorsque le capot est en position fermée.

La doublure 3 s'étend ici sur toute la surface du capot, mais elle demeurerait conforme à l'invention si elle était limitée à la largeur du corps creux ou à toute autre partie du capot. Comme déjà indiqué, la présente description ne s'intéresse à la doublure que dans sa partie constituant le corps creux avec le capot, indépendamment de la forme éventuelle de ladite doublure en dehors du corps creux.

Dans sa partie constituant le corps creux, la doublure 3 a une section en U et comporte deux parois latérales 17 et une paroi de fond 19. Les parois latérales de la doublure sont reliées à la peau du capot par l'intermédiaire d'un joint de mastic ou de colle 14, de sorte que la doublure forme avec la peau de capot une cavité sensiblement fermée. Dans l'exemple de la figure 3, la paroi de fond 19 présente deux zones de moindre épaisseur ou strictions 21 situées au pied des deux parois latérales 17.

On comprend que si une force F est appliquée sur le capot 1, avec éventuellement interposition d'un joint de mastic ou colle 14, la doublure 3 transmet cette force au rebord en tôle, lequel exerce une force de réaction sur la paroi de fond 19 de la doublure, ce qui provoque, par cisaillement des zones de faible épaisseur 21, la rupture du fond 19 et l'ouverture d'un passage entre les deux parois latérales 17, comme représenté à la figure 3bis. Le corps creux peut alors s'enfoncer dans le compartiment moteur en laissant le bord en tôle pénétrer entre ses deux parois latérales 17.

On notera que la hauteur du rebord en tôle 9 est inférieure à la hauteur du corps creux de manière que, en fin de course de l'enfoncement, le rebord en tôle 9 ne vienne pas s'appliquer directement contre le capot 1, ce qui le rendrait dangereux pour la tête d'un piéton.

Dans l'exemple de la figure 4, le fond 23 de la doublure comporte une seule zone de faible épaisseur 25 dans sa partie centrale, constituée par une rainure longitudinale. Dans cet exemple, la zone de moindre épaisseur 25 est située au droit du rebord 9 et s'étend sur une largeur suffisamment grande pour couvrir le rebord 9. Comme cela est représenté sur la figure 4bis, l'enfoncement du capot dans le compartiment moteur provoque la découpe de la zone de faible épaisseur 25, ce qui permet, comme précédemment, le passage du rebord en tôle 9 entre les deux parois latérales 17 de la doublure. Dans le mode de réalisation de la figure 5, des zones de faible épaisseur, ou strictions, 26 sont formées dans les parois latérales 29 de la doublure, tandis que le fond 31 de la doublure est d'épaisseur constante. La forme des strictions est telle que les parois latérales peuvent non seulement se déchirer à l'emplacement desdites strictions, mais elles peuvent également se plier, facilitant ainsi l'effacement du corps creux en cas de choc piéton, comme cela est représenté à la figure 5bis.

Sur la figure 6, on a représenté une section selon VI-VI de la figure 1 montrant une goulotte ou gaine rigide 13 dans laquelle est passée une gaine rigide 35 contenant des faisceaux électriques et contenant un boîtier électronique 37.

Une zone de moindre épaisseur ou striction 41 est ménagée dans la paroi de fond 39 de la doublure, au droit du rebord en tôle 9 de la goulotte ou gaine rigide sur une largeur suffisamment grande pour couvrir le rebord.

Cette doublure fonctionne comme celle de la figure 4, c'est à dire que l'enfoncement du capot dans le compartiment moteur provoque la découpe de la zone de faible épaisseur 41. Dans ce cas, seulement une partie d'une paroi formant paroi latérale du corps creux, celle située le plus au centre du capot, s'enfonce dans le compartiment moteur plus bas que le rebord 9, l'autre paroi formant paroi latérale du corps creux étant retenue par le boîtier électronique 37, comme cela est représenté à la figure 6bis.

Sur la figure 7, deux zones de moindre épaisseur 42 sont ménagées dans la paroi de fond 40 du corps creux de la doublure, en dehors du rebord en tôle 9 de la goulotte ou gaine rigide. Ce mode de réalisation est conforme à celui de la figure 3 et le fond 40 du corps creux se rompt donc dans chacune des deux zones de moindre épaisseur, comme on le voit sur la figure 7bis, pour ménager un passage au point dur entre les parois latérales. Comme sur la figure 6 bis, une seule paroi latérale du corps creux, celle située le plus au centre du capot, est apte s'enfoncer plus bas que le point dur dans le compartiment moteur.

Dans l'exemple de la figure 8, la paroi de fond 43 de la doublure est prise en sandwich entre un charnon 45 et une platine de serrage 46 d'une charnière 47. Une portion étroite 49 de la paroi de fond n'est pas prise en sandwich entre ces deux pièces. Cette portion étroite se trouve en porte-à-faux par rapport à la charnière et présente une moindre épaisseur. Elle est donc apte à se rompre par cisaillement en cas d'enfoncement du capot, comme on le voit sur la figure 8bis. Comme cela est également représenté sur cette figure, cela permet à une partie d'une paroi formant paroi latérale du corps creux de pouvoir s'enfoncer dans le compartiment moteur plus bas que la charnière. La paroi formant paroi de fond du corps creux, autre que la portion étroite, reste reliée au charnon et à la platine de serrage.

Dans le mode de réalisation de la figure 9, une butée capot 51 est montée fixe dans le compartiment moteur, en étant portée par la traverse supérieure 53 d'une face avant technique (non représentée). La doublure comporte, comme celle de la figure 3, deux strictions 21 situées dans son fond 19, au pied de chaque paroi latérale 17, ainsi que deux strictions d'épaisseur 26, ménagées dans les parois latérales, au voisinage des pieds de celle-ci. Dans ce cas, comme cela est représenté à la figure 9bis, le corps creux se déforme tout d'abord de sorte que la paroi latérale 17 se plie au niveau de la striction d'épaisseur 26 de la paroi latérale puis se rompt dans cette zone, facilitant l'effacement du corps creux.

Sur la figure 10, on a représenté un corps creux d'une doublure de capot, s'étendant par exemple à l'arrière du capot, au droit d'un point dur (non représenté sur la figure 10) tel que le rebord de la boîte à eau. Ce corps creux comprend un fond 60 et deux parois latérales 62. Dans chacune de ses parois latérales 62, est ménagée une première série d'orifices traversants rectangulaires 64, de dimension longitudinale orientée selon la direction longitudinale du corps creux. Ces orifices 64 sont situés essentiellement au milieu de chacune des parois latérale 62 et les axes longitudinaux respectifs de ces orifices sont confondus, de sorte que ces orifices sont dans le prolongement les uns des autres.

Le corps creux comprend également, associée à chacune des parois latérales 62, une deuxième série d'orifices traversants rectangulaires 66, ménagés au pied de chacune des parois latérales 62, partiellement sur la paroi latérale 62 et partiellement sur la paroi de fond du corps creux 60, en interrompant une arête 67a,67b reliant respectivement la paroi de fond 60 et chacune des parois latérales 62. La dimension longitudinale des orifices rectangulaires 66 est orientée selon la direction longitudinale du corps creux et les axes longitudinaux respectifs de ces orifices sont confondus, de sorte que ces orifices 64 sont dans le prolongement les uns des autres.

La première et la deuxième séries d'orifices 64, 66 d'une même paroi latérale 62 sont décalés l'un par rapport à l'autre de sorte qu'une section de la paroi latérale 62 ne comprend au maximum qu'un seul orifice. En outre, chaque orifice 64, 66 d'une paroi latérale est en vis-à vis avec un orifice 64, 66 de l'autre paroi latérale.

Lorsque le corps creux est soumis à un choc piéton, il prend appui sur un point dur 70, situé sous le corps creux et représenté sur les figures 10ter et 10quater. Il a alors tendance à se plier au niveau des zones de faiblesse constituées par les première et deuxième séries d'orifices 64, 66 et à se fissurer dans ces zones, comme on le voit sur les figures 10bis et 10ter. Sur chaque paroi latérale 62, des fissures 68 issues d'au moins un des orifices rectangulaires 64, 66 de chacune des première et deuxième séries, se propage dans tout le corps creux, selon la direction longitudinale de celui-ci. Le corps creux se rompt alors selon quatre axe distincts, pour former cinq parties indépendantes 72a à 72e. Comme on le voit sur la figure 10quater, suite au choc piéton, les différentes parties du corps creux forment une superposition de parois planes permettant de diminuer énormément la hauteur du corps creux.

Quelque soit son mode de réalisation, l'invention procure une protection contre les chocs piéton tout en maintenant les avantages liés à la présence d'un corps creux en dessous du capot du véhicule.

L'invention n'est en outre pas limitée aux modes de réalisation décrits. Il est en effet envisageable que la zone de faiblesse soit constituée par d'autres moyens que ceux décrits dans l'invention, par exemple par l'intermédiaire d'une paroi latérale du corps creux comprenant deux parties d'épaisseur constante mais formant entre elles un angle non nul.

En outre, seule une paroi latérale peut comprendre une zone de faiblesse.

Les zones de moindre épaisseur et les orifices traversant peuvent également être ménagés à d'autres endroits des corps creux que ceux décrits et peuvent être utilisés en combinaison.

En particulier, lors du dimensionnement de la pièce, les orifices peuvent être alignés ou décalés de manière à orienter les lignes de rupture dans une ou plusieurs directions privilégiées, par exemple en étoile. On peut ainsi contrôler la propagation de la rupture d'un orifice à l'autre afin de découper et réduire le corps creux à une hauteur minimale en fin de choc.

Il est également à signaler que la doublure peut être constituée en un matériau autre que celui décrit, comme par exemple en thermoplastique ou en matériau hybride métal/plastique.

## Revendications

1. Ensemble d'un capot (1) de véhicule automobile et d'une doublure (3) de capot (1) de véhicule automobile, la doublure s'étendant sur toute la surface du capot et étant destinée à rigidifier ce capot au voisinage de sa périphérie en formant avec lui un corps creux au moins sur une partie de sa périphérie, cette doublure présentant, dans sa partie constituant le corps creux, une section transversale sensiblement en U ayant un fond (19 ; 23 ; 31 ; 39 ; 40 ; 43 ; 60) et des parois latérales (17 ; 62), **caractérisée en ce que** ledit fond ou au moins une desdites parois latérales présente, au moins localement, une zone de faiblesse (21 ; 25 ; 26 ; 41 ; 42 ; 49 ; 64, 66), dimensionnée de manière à ce que, en cas de choc du capot avec la tête d'un piéton, une fois que le fond du corps creux a pris appui sur un point dur (9 ; 47 ; 51 ;70) haut placé du compartiment moteur, la zone de faiblesse se rompe, ladite zone de faiblesse étant en outre dimensionnée pour se rompre en permettant à au moins une partie (17) formant le corps creux, notamment au moins une partie d'une paroi formant paroi latérale du corps creux, de s'enfoncer dans le compartiment moteur plus bas que le point dur (9 ; 47 ; 51).

2. Ensemble selon la revendication précédente, dans laquelle la zone de faiblesse est une zone de moindre épaisseur (21 ; 25 ; 26 ; 41 ; 42 ; 49).

3. Ensemble selon la revendication précédente, dans laquelle la zone de moindre épaisseur (25) est ménagée dans le fond (23) du corps creux et comprend une rainure longitudinale située sensiblement au milieu dudit fond, sur une largeur suffisamment grande pour couvrir les points durs (9) présents sous la doublure dans le compartiment moteur.

4. Ensemble selon la revendication 2, dans laquelle deux zones de moindre épaisseur (21 ; 41 ; 42) se situent aux pieds de parois latérales bordant le fond (19 ; 39 ; 40) du corps creux.

5. Ensemble selon l'une quelconque des revendications précédentes, dans laquelle la zone de faiblesse comprend un orifice traversant (64, 66) ménagé dans le fond (60) et/ou au moins une des parois latérales (62) du corps creux.

6. Ensemble selon l'une quelconque des revendications précédentes, réalisée au moins partiellement en une matière plastique, notamment en un matériau composite.

7. Combinaison d'un ensemble selon l'une quelconque des revendications précédentes et d'un point dur (9 ; 47 ; 51 ;70) haut placé dans le compartiment moteur.

8. Combinaison d'un ensemble selon l'une quelconque des revendications 1 à 6 et d'une boîte à eau (11) formée par une cloison d'auvent ayant un rebord (9) sensiblement vertical, au voisinage duquel se trouve le fond (19 ; 23) du corps creux lorsque le capot est en position fermée.

9. Combinaison selon la revendication précédente, dans laquelle le rebord (9) de la boîte à eau formée par la cloison d'auvent porte un joint d'étanchéité (15) qui est destiné à venir s'appuyer contre le fond du corps creux en position fermée du capot.

10. Combinaison d'un ensemble selon l'une quelconque des revendications 1 à 6 et d'une gaine rigide (13), s'étendant depuis les montants latéraux du pare-brise en direction de l'avant du véhicule, ayant un rebord (9) sensiblement vertical, au voisinage duquel se trouve le fond (39 ; 40) du corps creux lorsque le capot est en position fermée.

11. Combinaison d'un ensemble selon l'une quelconque des revendications 1 à 6 et d'une butée capot (51) montée fixe dans le compartiment moteur.

12. Combinaison d'un ensemble selon l'une quelconque des revendications 1 à 6 et de l'élément supérieur mobile (45), appelé charnon mobile, d'une charnière (47) de capot solidaire du fond (43) de la doublure, dans laquelle le fond (43) du corps creux comporte une partie en porte-à-faux par rapport au charnon mobile et dans laquelle est ménagée la zone de faiblesse (49).

13. Combinaison d'un ensemble selon l'une quelconque des revendications 1 à 6 et d'une gâche de serrure solidaire du fond du corps creux, le fond du corps creux comportant une partie en porte-à-faux par rapport à la gâche et dans laquelle est ménagée la zone de faiblesse.

## Patentansprüche

1. Einheit aus einer Motorhaube (1) eines Kraftfahrzeugs und einer Auskleidung (3) der Motorhaube (1) eines Kraftfahrzeugs, wobei sich die Auskleidung auf der gesamten Oberfläche der Motorhaube erstreckt und dazu bestimmt ist, diese Motorhaube in der Nähe ihres Umfangs zu versteifen, indem sie mit ihr einen Hohlkörper mindestens auf einem Teil ihres Umfangs bildet, wobei diese Auskleidung in ihrem Teil, der den Hohlkörper bildet, einen Querschnitt im Wesentlichen in U-Form aufweist, der einen Boden (19; 23; 31; 39; 40; 43; 60) und Seitenwände (17; 62) hat, **dadurch gekennzeichnet, dass** der Boden oder mindestens eine der Seitenwände mindestens stellenweise eine Schwächungszone (21; 25; 26; 41; 42; 49; 64; 66) aufweist, die derart bemessen ist, dass bei einem Aufprall der Motorhaube mit dem Kopf eines Fußgängers, sobald der Boden des Hohlkörpers auf einer harten Stelle (9; 47; 51; 70), die in dem Motorraum hoch platziert ist, zum Aufliegen gekommen ist, die Schwächungszone bricht, wobei die Schwächungszone außerdem bemessen ist, um zu brechen, indem mindestens einem Teil (17), der den Hohlkörper bildet, insbesondere mindestens einem Teil einer Wand, die die Seitenwand des Hohlkörpers bildet, erlaubt wird, sich in den Motorraum tiefer als die harte Stelle (9; 47; 51) einzudrücken.

2. Einheit nach dem vorhergehenden Anspruch, bei der die Schwächungszone eine Zone mit geringerer Stärke (21; 25; 26; 41; 42; 49) ist.

3. Einheit nach dem vorhergehenden Anspruch, bei der die Zone mit geringerer Stärke (25) in dem Boden (23) des Hohlkörpers eingerichtet ist und eine Längsrille aufweist, die im Wesentlichen in der Mitte des Bodens liegt, auf einer Breite, die ausreichend groß ist, um die harten Stellen (9), die unter der Auskleidung in dem Motorraum gegenwärtig sind, abzudecken.

4. Einheit nach Anspruch 2, bei der die zwei Zonen mit geringerer Stärke (21; 41; 42) an den Füßen der Seitenwände liegen, die den Boden (19; 39; 40) des Hohlkörpers umgrenzen.

5. Einheit nach einem der vorhergehenden Ansprüche, bei der die Schwächungszone eine durchgehende Öffnung (64, 66) aufweist, die in dem Boden (60) und/oder mindestens in einer der Seitenwände (62) des Hohlkörpers eingerichtet ist.

6. Einheit nach einem der vorhergehenden Ansprüche, die mindestens teilweise aus einem Kunststoff, insbesondere aus einem Verbundwerkstoff hergestellt ist.

7. Kombination einer Einheit nach einem der vorhergehenden Ansprüche und einer harten Stelle (9; 47; 51; 70) die hoch in dem Motorraum platziert ist.

8. Kombination aus einer Einheit nach einem der Ansprüche 1 bis 6 und einem Wasserkasten (11), der von einer Windlaufquerteilwand gebildet ist, die einen im Wesentlichen vertikalen Rand (9) hat, in dessen Nähe sich der Boden (19; 23) des Hohlkörpers befindet, wenn die Motorhaube in geschlossener Position ist.

9. Kombination nach dem vorhergehenden Anspruch, bei der der Rand (9) des Wasserkastens, der von der Windlaufquerteilwand gebildet wird, eine Dichtung (15) trägt, die dazu bestimmt ist, gegen den Boden des Hohlkörpers in geschlossener Position der Haube zum Anliegen zu kommen.

10. Kombination aus einer Einheit nach einem der Ansprüche 1 bis 6 und einem starren Mantel (13), der sich von den seitlichen Streben der Windschutzscheibe in Richtung der Vorderseite des Fahrzeugs erstreckt, die einen im Wesentlichen vertikalen Rand (9) hat, in dessen Nähe sich der Boden (39; 40) des Hohlkörpers befindet, wenn die Motorhaube in geschlossener Position ist.

11. Kombination einer Einheit nach einem der Ansprüche 1 bis 6 und einem Motorhaubenanschlag (51), der stationär in dem Motorraum montiert ist.

12. Kombination aus einer Einheit nach einem der Ansprüche 1 bis 6 und dem oberen beweglichen Element (45), bewegliches Lagerelement genannt, eines Motorhaubenscharniers (47), das fest mit dem Boden (43) der Auskleidung verbunden ist, in der der Boden (43) des Hohlkörpers einen Teil aufweist, der in Bezug auf das bewegliche Lagerelement auskragend ist und in dem die Schwächungszone (49) eingerichtet ist.

13. Kombination aus einer Einheit nach einem der Ansprüche 1 bis 6 und einer Schlossraste, die fest mit dem Boden des Hohlkörpers verbunden ist, wobei der Boden des Hohlkörpers einen Teil aufweist, der in Bezug auf die Raste auskragend ist und in dem die Schwächungszone eingerichtet ist.

## Claims

1. An assembly of a motor vehicle hood (1) and a motor vehicle hood lining (3), said lining extending over the entire surface of the hood and being intended to stiffen the hood in the vicinity of its periphery and co-operating therewith to form a hollow body over at least a fraction of its periphery, said lining having, in its fraction forming the hollow body, a substantially U-cross section having a bottom (19, 23, 31, 39, 40, 43, 60) and side walls (17, 62), **characterized in that** said bottom or at least one of said side walls presents, at least locally, a zone of weakness (21, 25, 26, 41, 42, 49, 64, 66) that is dimensioned in such a manner that in the event of the hood impacting the head of a pedestrian, once the bottom of the hollow body has come to bear against a high hard point (9, 47, 51, 70) located in the engine compartment, the zone of weakness breaks, the zone of weakness being dimensioned to break, allowing at least a portion (17) forming the hollow body, and in particular at least a portion of a wall forming a side wall of the hollow body, to move down into the engine compartment to below the hard point (9, 47, 51).

2. An assembly according to the preceding claim, wherein the zone of weakness is a zone of reduced thickness (21, 25, 26, 41, 42, 49).

3. An assembly according to the preceding claim, wherein the zone of reduced thickness (25) is formed in the bottom (23) of the hollow body and comprises a longitudinal groove situated substantially in the middle of said bottom over a width that is sufficient to cover the hard points (9) present under the lining in the engine compartment.

4. An assembly according to claim 2, wherein two zones of reduced thickness (21, 41, 42) are situated at the bottoms of the side walls on either side of the bottom (19, 39, 40) of the hollow body.

5. An assembly according to any of the preceding claims, wherein the zone of weakness includes a through orifice (64, 66) formed in the bottom (60) and/or in at least one of the side walls (62) of the hollow body.

6. An assembly according to any of the preceding claims, made at least in part out of plastics material, in particular a composite material.

7. A combination of an assembly according to any of the preceding claims and a high hard point (9, 47, 51, 70) placed in the engine compartment.

8. A combination of an assembly according to any of the claims 1 to 6 and a water reservoir (11) formed by a scuttle partition having a substantially vertical flange (9), with the bottom (19, 23) of the hollow body being located in the vicinity thereof when the hood is in the closed position;

9. A combination according to the preceding claim, wherein the flange (9) of the water reservoir formed by the scuttle partition carries a seal (15) that comes to bear against the bottom of the hollow body when the hood is in the closed position.

10. A combination of an assembly according to any of the claims 1 to 6 and a rigid sheath (13) extending from the lateral uprights of the windshield towards the front of the vehicle, having a substantially vertical flange (9), with the bottom (39, 40) of the hollow body being located substantially in the vicinity thereof when the hood is in the closed position.

11. A combination of an assembly according to any of the claims 1 to 6 and a hood abutment (51) mounted in a fixed position in the engine compartment.

12. A combination of an assembly according to any of the claims 1 to 6 and a movable top element (45) referred to as a hinge plate, of a hood hinge (47) secured to the bottom (43) of the lining, wherein the bottom (43) of the hollow body includes a portion that is cantilevered out from the hinge plate and that has the zone of weakness (49) formed therein.

13. A combination of an assembly according to any of the claims 1 to 6 and a lock striker plate secured to the bottom of the hollow body, the bottom of the hollow body including a portion that is cantilevered out from the striker plate and that has the zone of weakness formed therein.
